Europäisches Patentamt

European Patent Office

Office européen des brevets

(19)

(11) Veröffentlichungsnummer: **0 008 344**
**B1**

(12)

# EUROPÄISCHE PATENTSCHRIFT

(45) Veröffentlichungstag der Patentschrift:
**23.03.83**

(21) Anmeldenummer: **79102288.2**

(22) Anmeldetag: **05.07.79**

(51) Int. Cl.³: **C 09 D 3/66,** C 08 G 63/18

(54) **Flüssige Überzugsmittel.**

(30) Priorität: **28.08.78 DE 2837522**
**08.03.79 DE 2909080**

(43) Veröffentlichungstag der Anmeldung:
**05.03.80 Patentblatt 80/5**

(45) Bekanntmachung des Hinweises auf die Patenterteilung:
**23.03.83 Patentblatt 83/12**

(84) Benannte Vertragsstaaten:
**BE CH FR GB IT NL SE**

(56) Entgegenhaltungen:
**DE-A-1 805 185**
**DE-A-1 807 776**
**DE-B-2 611 691**
**FR-A-2 139 044**
**FR-A-2 242 448**
**FR-A-2 280 694**
**FR-A-2 286 866**

(73) Patentinhaber: **CHEMISCHE WERKE HÜLS AG,**
**Postfach 1320, D-4370 Marl 1 (DE)**

(72) Erfinder: **Dörffel, Jörg, Dr., Bitterfelder Strasse 4,**
**D-4370 Marl (DE)**
Erfinder: **Haneklaus, Karl-Heinz, Röntgenstrasse 16,**
**D-4370 Marl (DE)**
Erfinder: **Speier, Peter, Hammkamp 13, D-4370 Marl (DE)**

## Flüssige Überzugsmittel

Gegenstand der Erfindung sind flüssige Überzugsmittel, bestehend aus einer Mischung aus einem Bindemittel, üblichen Lösemitteln sowie gegebenenfalls üblichen Hilfsstoffen, wobei das Überzugsmittel als Bindemittel

A.  45 – 5 Gewichtsprozent Aminoplaste und
B.  55 – 95 Gewichtsprozent mindestens bifunktionelle, überwiegend freie Hydroxyl- neben gegebenenfalls freie Carboxylendgruppen tragende lineare Polyester bzw. -gemische mit einem Molgewicht von 1500 – 5000

enthält, wobei die Polyester der Komponente B. durch Kondensieren von

I.  Butandiol, Neopentylglykol und gegebenenfalls Propandiol sowie weiteren längerkettigen Diolen mit primären und/oder sekundären Hydroxylgruppen mit
II.  überwiegend aromatischen neben aliphatischen Dicarbonsäuren mit 4 – 12 C-Atomen in der Kette

erhalten werden.

Überzugsmittel, die als Bindemittel Gemische aus Polyestern und Aminoplasten enthalten, zählen zum Stand der Technik (DE-OS 1 805 186, DE-AS 2 621 657, DE-PS 1 805 182). Die daraus hergestellten Überzüge weisen sehr gute technologische und mechanische Eigenschaften auf.

Die Überzugsmittelsysteme zeigen in der Praxis unter bestimmten Auftragsbedingungen (dünne Überzugsschichten, sehr kurze Ablüftzeit) nach dem Einbrennen am Überzug einen wesentlichen Mangel. Es werden wohl gleichmäßige Oberflächen erhalten, die jedoch Krater aufweisen. Abgesehen davon, daß hierdurch ein optisch ungünstiges Bild vom Überzug entsteht, stellen die Krater eine Schwachstelle dar, an der leicht eine Korrosion beginnen kann.

An sich ist die Kraterbildung eine für den Fachmann nicht unbekannte Fehlerquelle. Bei anderen Überzugsmittelsystemen kann sie durch übliche Hilfsmittel, wie z. B. Verlaufmittel, beseitigt werden. Bei den vorliegenden Systemen aus Polyestern und Aminoplasten hatte sich gezeigt, daß solche üblichen Maßnahmen nicht zu einem vollen Erfolg, d. h. zum vollständigen Verschwinden der Krater führen. Im Gegenteil — mit steigender Zugabe entsprechender Hilfsmittelmengen fallen einige lacktechnische Eigenschaften, wie z. B. Überdruckbarkeit, der eingebrannten Überzüge ab. Aufgabe der Erfindung war es, das bekannte Überzugsmittelsystem so zu modifizieren, daß es unter allen Umständen glatte, kraterfreie Überzüge ergibt, ohne daß das für dieses System charakteristisch gute Eigenschaftsbild verloren geht.

Diese Aufgabe wurde dadurch gelöst, daß in den Überzugsmitteln neben den Aminoplasten als Bindemittel noch Polyester verwendet werden, die durch Kondensieren der Diolkomponente I. und der Säurekomponente II. erhalten werden, indem die Komponente I. ein Gemisch darstellt, bestehend aus

I.1  5 – 30 Molprozent Butandiol-(1.n), wobei n den Wert 3 oder 4 annehmen kann,
I.2  95 – 70 Molprozent Neopentylglykol, das bis zu 60 Molprozent — bezogen auf Neopentylglykol entsprechend 100 Molprozent — durch Propandiol-(1.2) ersetzt sein kann,

und daß die Komponente II. ein Gemisch darstellt, bestehend aus

II.1  95 – 70 Molprozent einer oder mehrerer aromatischer Dicarbonsäuren, die bis zu 30 Molprozent — bezogen auf alle aromatischen Dicarbonsäuren entsprechend 100 Molprozent — durch cycloaliphatische Dicarbonsäuren ersetzt sein können, und
II.2  5 – 30 Molprozent einer oder mehrerer aliphatischer Dicarbonsäuren.

Die Diolkomponente I. setzt sich vorzugsweise zusammen aus 10 bis 25 Molprozent Butandiol-(1.3) bzw. Butandiol-(1.4) und 90 bis 75 Molprozent Neopentylglykol. Darüber hinaus ist es eine bevorzugte Maßnahme, bis zu 50 Molprozent — den gesamten Neopentylglykolanteil als 100 Molprozent gerechnet — dieses Diol durch Propandiol-(1.2) zu ersetzen.

In untergeordneten Mengen können Diole (I.3) mit primären und/oder sekundären Hydroxylgruppen mitverwendet werden, die durch eine Kette von mindestens 3 C-Atomen getrennt sind, beispielsweise Propandiol-(1.3), Butandiol-(1.3), Butandiol-(1.4), Pentandiol-(1.4), Pentandiol-(1.5), Hexandiol-(1.4), Hexandiol-(1.5), Hexandiol-(1.6), 2-Ethylpropandiol-(1.3), 2-Ethylhexandiol-(1.3), Cyclohexandiol-(1.4) sowie 1.4-Bis-(hydroxymethyl)-cyclohexan. Diese Diole sollen sich grundsätzlich von dem als Komponente I.1 genannten Butandiol-(1.4) unterscheiden.

Als aromatische Dicarbonsäuren sind u. a. Phthalsäure, Isophthalsäure oder Terephthalsäure geeignet. Sie werden vorzugsweise in Mengen von 90 bis 75 Molprozent eingesetzt, wobei Isophthalsäure und insbesondere Phthalsäure der Vorzug gegeben wird. Bis zu 30 Molprozent, vorzugsweise <15 Molprozent — bezogen auf alle aromatischen Dicarbonsäuren entsprechend 100 Molprozent — können diese durch cycloaliphatische Säuren, wie Hexahydroterephthalsäure, Tetrahydrophthalsäure, Hexahydrophthalsäure, Hexahydroisophthalsäure, Endomethylentetrahydrophthalsäure, Endoethylentetrahydrophthalsäure bzw. Hexachlorendomethylen-tetrahydrophthalsäure, ersetzt werden.

Als aliphatische Säuren der Komponente II.2 können z. B. Bernsteinsäure, Glutarsäure, Adipinsäure, Korksäure, Sebazinsäure, Azelainsäure, Decandicarbonsäure, 2.2.4-Trimethyladipinsäure oder 2.4.4-Trimethyladipinsäure, eingesetzt werden. Die Verwendung gesättigter aliphatischer Dicarbonsäuren mit 4 bis 6 C-Atomen, insbesondere Adipinsäure, wird bevorzugt. Die genannten Säuren werden insbesondere in Mengen von 10 bis 25 Molprozent eingesetzt.

Anstelle der freien Dicarbonsäuren können auch ihre Ester mit kurzkettigen Alkoholen, wie z. B. Methanol, Ethanol, Propanol, als Ausgangsprodukte gewählt werden. Sofern die Dicarbonsäuren Anhydride bilden, können auch diese verwendet werden.

Die zu den Komponenten I.3 bzw. II. aufgezählten Diole bzw. Dicarbonsäuren können sowohl einzeln als auch im Gemisch eingesetzt werden.

Überzüge mit besonders guten Eigenschaften werden dann erhalten, wenn in den Überzugsmitteln als Bindemittelkomponente Polyester verwendet werden, deren mittleres Molekulargewicht vorzugsweise im Bereich von 2000 bis 4000, insbesondere von 2500 bis 3500 liegt. Unter mittlerem Molekulargewicht wird dasjenige verstanden, welches als Zahlenmittel ausgedrückt und durch Endgruppentitration bestimmt wird. — Ferner ist es von Vorteil, wenn solche Polyester verwendet werden, die überwiegend Hydroxylendgruppen besitzen.

Die Zusammensetzung der Polyester sowie ihr Molekulargewicht haben einen wesentlichen Einfluß auf das lacktechnische Verhalten der Überzugsmittel bzw. auf die Eigenschaften der eingebrannten Überzüge. Nach welchen Gesichtspunkten die Säurekomponente und das Molekulargewicht auszuwählen bzw. einzustellen sind, ist dem Fachmann bekannt (siehe z. B. DE-PS 1 805 182, Spalte 4, Zeile 42ff). Es ist weiterhin selbstverständlich, bei der Auswahl der Säurebausteine zu beachten, daß die daraus hergestellten Polyester mit den mitzuverwendenden Aminoplasten eine ausreichende Löslichkeit bzw. Verträglichkeit aufweisen.

Das gleiche gilt für die Zusammensetzung der Diolkomponente. Wird ausschließlich Neopentylglykol als Diol verwendet, so werden Überzugsmittel erhalten, die im Vergleich zu den erfindungsgemäßen Überzügen mit schlechten mechanischen Eigenschaften, insbesondere bezüglich der Haftfestigkeit nach starker Verformung (Tiefziehen) führen. Außerdem sind Glanz und Oberflächenglätte der Überzüge unbefriedigend. Weiterhin neigen derartige Polyester bei höherem Anteil an aromatischen Dicarbonsäuren, die zur Erreichung ausreichender Härte der Überzüge erforderlich sind, in üblichen Lacklösemitteln, wie z. B. Aromaten, Estern oder deren Mischungen, zum Kristallisieren. Sie sind daher für die Praxis nicht geeignet.

Das als wesentliche Diolkomponente vorliegende Neopentylglykol kann bis zu 60% durch Propandiol-(1.2) ersetzt werden. Darüber hinausgehende Propandiol-(1.2)-Anteile führen zu Überzügen mit Kratern. Wird das Neopentylglykol teilweise durch Ethylenglykol ersetzt, werden Überzugsmittel erhalten, die ebenfalls nur zu Überzügen mit Kratern führen.

Ersetzt man das erfindungsgemäß mitzuverwendende Butandiol (gemäß Komponente I.1 des Patentanspruches) vollständig durch andere Diole, von denen bekannt ist, daß sie flexiblere Überzüge ergeben, so z. B. Diethylenglykol, Dipropylenglykol oder Hexandiol-(1.6), so werden gleichfalls ausschließlich Überzüge mit Kratern erhalten.

Die Herstellung der Polyester erfolgt nach bekannten Methoden, wie sie beispielsweise in DE-PS 1 805 182, Spalte 4, Zeile 16ff, beschrieben sind. In der Regel wird zur Herstellung der Polyester in der Ausgangsmischung ein Diol/Dicarbonsäure-Verhältnis gewählt, welches >1 ist. Üblicherweise wird die Veresterungsreaktion solange durchgeführt, bis Polyester mit Säurezahlen <10 mg KOH/g erhalten werden.

Als geeignete Aminoplaste kommen die bekannten Umsetzungsprodukte von Aldehyden, insbesondere Formaldehyd mit mehrere Amino- oder Amidogruppen tragenden Substanzen infrage, wie z. B. Melamin, Harnstoff, Dicyandiamid, Benzoguanamin etc. Besonders geeignet sind die mit Alkoholen mit 1 bis 4 C-Atomen in der Kette veretherten Melamin-Formaldehyd-Kondensate, wie sie z. B. bei D. H. Solomon, The Chemistry of Organic Filmformers, 235–240, John Wiley & Sons, Inc., New York, 1967, beschrieben werden.

Das Gewichtsverhältnis Polyester zu Aminoplast kann zwischen 55 : 45 und 95 : 5, vorzugsweise zwischen 75 : 25 und 90 : 10 schwanken; das für den jeweiligen Verwendungszweck der Lacke optimale Verhältnis läßt sich durch wenige Vorversuche leicht ermitteln. Dabei ist zu berücksichtigen, daß häufig durch Erhöhung des Aminoplastanteils die Härte der Lackfilme erhöht und deren Elastizität vermindert wird, während bei Erniedrigung des Aminoplastanteils die Härte nachläßt und die Flexibilität zunimmt.

Zur Herstellung der Überzüge werden in der Regel zunächst Polyester und Aminoplast in üblichen Lacklösemitteln, wie beispielsweise Toluol, Xylol, Gemischen höhersiedender aromatischer Kohlenwasserstoffe, Propanol, i-Propanol, Butanol, Ethylacetat, Butylacetat, Ethylglykolacetat, Butylglykol, Methylethylketon, Methylisobutylketon, Cyclohexanon, Trichlorethylen oder auch Gemische der genannten Lösemittel, gelöst.

Der Bindemittelgehalt der Überzugsmittel kann je nach Verwendungszweck in den üblichen Grenzen schwanken. Die erfindungsgemäßen Überzugsmittel können neben größeren Mengen Pigment die üblichen Zusatz- und Hilfsstoffe enthalten, insbesondere Verlaufmittel oder zusätzlich andere Bindemittel, wie z. B. Epoxidharze bzw. hydroxylgruppenhaltige Silikonharze.

Das Bindemittel/Pigment-Verhältnis wird durch den jeweiligen Verwendungszweck des Überzugs bestimmt. So werden die Bindemittel, wenn sie zur Herstellung von Autodecklacken oder Industrielacken eingesetzt werden, im Verhältnis 1 : 0,3 bis 1 : 1 pigmentiert. Selbst bei einem Bindemittel/Pigment-Verhältnis von 1 : 1,1 bis 1 : 1,3, wie es bei der Emballagenlackierung oder beim Coilcoating üblich ist, zeigen die Überzüge ungewöhnlich gute Eigenschaften. Das erfindungsgemäße Überzugsmittel kann auch noch höhere Pigmentgehalte aufweisen, wie sie z. B. bei der Herstellung von Grundierungen üblich sind.

Das erhaltene Überzugsmittel wird nach üblichen Verfahren, beispielsweise Streichen, Spritzen, Tauchen oder Walzen — kalt, warm oder heiß — aufgetragen und bei Temperaturen zwischen 100 und 350° C, vorzugsweise zwischen 120 und 320° C eingebrannt. Die dabei ablaufenden Vernetzungsreaktionen werden durch saure Verbindungen katalytisch beschleunigt. Insbesondere bei Verwendung von nahezu vollständig veretherten Hexamethylolmelaminderivaten werden daher bevorzugt saure Katalysatoren, wie z. B. p-Toluolsulfonsäure, dem Überzugsmittel zugesetzt. Da es bei Einsatz dieser stark sauren Verbindungen bereits bei Raumtemperatur zu einer Erhöhung der Viskosität des Überzugsmittels kommen kann, ist es angebracht, geblockte Katalysatoren einzusetzen, die erst bei höheren Temperaturen ihre katalytische Wirksamkeit entfalten. Aus Gründen der verbesserten Lagerstabilität und der besseren elektrostatischen Verarbeitbarkeit ist die Verwendung von solchen geblockten Säuren bevorzugt, wie sie in der DE-AS 2 345 114 oder DE-PS 2 356 768 beschrieben sind. Bei Einsatz von höherreaktiven Aminoplasten wird vorzugsweise auf einen Zusatz von Katalysatoren verzichtet.

Sofern es die Umstände gebieten, kann auch dadurch der Zusatz von stark sauren Substanzen vermieden werden — insbesondere bei Verwendung von Polyestern mit sehr niedriger Säurezahl — indem diese mit etwa 1 bis 5 Gewichtsprozent — bezogen auf den Polyester — eines Anhydrids einer relativ stark sauren Dicarbonsäure, wie z. B. Maleinsäure oder Trimellitsäure, umgesetzt werden.

Die erfindungsgemäß hergestellten Überzüge haben eine Fülle von guten Eigenschaften. Sie sind hochglänzend, gut pigmentierbar und besitzen eine ausgezeichnete Haftung — insbesondere auf Metallen. Bei Salzsprühversuchen, Tropentests und Prüfungen im Wheatherometer zeigen sie eine gute Korrosionsschutzwirkung und Wetterbeständigkeit. Die Überzugsmittel selbst zeigen, insbesondere bei Verwendung nichtionogen geblockter Katalysatoren oder Einsatz höherreaktiver Melaminharze, gute Lagerstabilitäten. Außerdem zeichnen sich diese Systeme durch gute Standfestigkeit an senkrechten Flächen während des Einbrennens aus.

Eine herausragende Eigenschaft der erfindungsgemäßen Überzugsmittel ist die Tatsache, daß sie nach dem Einbrennen glatte, kraterfreie Überzüge ergeben, selbst wenn sie in dünner Schicht aufgetragen und anschließend nach einer nur sehr kurzen Ablüftzeit eingebrannt werden.

Gleichfalls hervorragend bewähren sich die Überzugsmittelsysteme, wenn sie nach dem Auftragen in einer kurzen Zeit und deswegen bei relativ hohen Temperaturen eingebrannt werden. Auch unter diesen Bedingungen ergeben sich kraterfreie Überzüge. Die bisherigen, aus dem Stande der Technik bekannten Systeme führten unter den obengenannten Bedingungen zu nicht befriedigenden Ergebnissen.

## Beispiele

### I. Polyesterherstellung

a. 999 g Neopentylglykol, 108 g Butandiol-(1.4), 1066 g Phthalsäureanhydrid und 350 g Adipinsäure werden unter einem Stickstoffstrom auf 150° C erhitzt, 2 Stunden bei dieser Temperatur belassen und nach Erwärmung auf 200° C weitere 37 Stunden unter Auskreisen des Wassers bis zu einer Säurezahl von 4,9 mg KOH/g kondensiert. Nach dem Abkühlen der Schmelze wird der Polyester bei 120° C 70%ig in einem Gemisch aus einem handelsüblichen, hochsiedende aromatische Kohlenwasserstoffe enthaltenden Lösemittel (SOLVESSO® 150) und Ethylglykol (9 : 1) gelöst.

b. 636 g Neopentylglykol, 465 g Propandiol-(1.2), 1587 g Phthalsäureanhydrid und 361 g Adipinsäure werden innerhalb von 11 Stunden bei einer maximalen Temperatur von 200° C bis zu einer Säurezahl von 76 mg KOH/g umgesetzt. Nach Abkühlung auf 150° C werden 194 g Butandiol-(1.4) hinzugefügt. Unter weiterem Auskreisen des Wassers wird die Veresterung innerhalb von 25 Stunden bei 200° C bis zu einer Säurezahl des Polyesters von 4,4 mg KOH/g fortgeführt. Das Harz wird wie unter I.a angegeben gelöst.

c. 632 g Neopentylglykol, 462 g Propandiol-(1.2), 202 g Butandiol-(1.3), 1539 g Phthalsäureanhydrid und 350 g Adipinsäure werden unter einem Stickstoffstrom auf 150° C erhitzt, 2 Stunden bei dieser Temperatur belassen und nach Erwärmung auf 200° C 41 weitere Stunden unter Auskreisen des Wassers bis zu einer Säurezahl von 4,8 mg KOH/g kondensiert. Der erhaltene Polyester weist eine Hydroxylzahl von 40,5 mg KOH/g auf, entsprechend einem mittleren Molekulargewicht von 2470. Das Harz wird wie unter I.a angegeben gelöst.

## II. Herstellung des Überzugsmittels

Die 70%ige Polyesterlösung wird im Verhältnis 82 : 18 — bezogen auf den Polyester — mit einem handelsüblichen flüssigen, weitgehend methylveretherten Hexamethylolmelamin (MAPRENAL® MF 900) gemischt und mit Titandioxid im Verhältnis 1 : 0,8 (Bindemittel : Pigment) pigmentiert. Nach Zugabe von 3,4% — bezogen auf das Gesamtbindemittel — einer handelsüblichen 50%igen Lösung eines nichtionogenen geblockten Katalysators wird das Überzugsmittel mit einem Gemisch aus SOLVESSO 150 und Ethylglykol (8 : 2) auf eine Viskosität verdünnt, die im DIN-Becher 4 (DIN 53 211) einer Auslaufzeit von 90 sec entspricht.

## III. Herstellung und Prüfung der Überzüge

Zur Prüfung wird das Überzugsmittel gemäß II. mit einer Spiralwalze auf 0,7 mm starke zinkphosphatierte Probebleche aufgebracht und unverzüglich bei einer Ofentemperatur von 265°C bzw. 315°C (Objekttemperatur in beiden Fällen: ca. 235°C) 60 sec bzw. 120 sec eingebrannt. Die Überzüge wiesen eine Schichtdicke von 25 bis 30 µm auf.

Zur Bestimmung der Flexibilität wird der T-Bend-Test durchgeführt; hierbei wird eine gute Flexibilität durch niedrige Zahlenwerte ausgedrückt, mit steigenden Werten verschlechtert sich die Eigenschaft. Die Härte wird als Bleistifthärte bestimmt. Beide Untersuchungen werden gemäß der ECCA-Norm durchgeführt.

Zur Feststellung der Güte der Haftung des Überzugs auf der Oberfläche des Probebleches wird in Anlehnung an die ECCA-Norm ein in der Praxis üblicher Test durchgeführt. Hierbei wird nach Durchführung des T-Bend-Testes an dem gleichen Probestück auf die Knickstelle ein Klebeband gedrückt und mit rascher Bewegung abgerissen. Die für diese Messung angegebene Maßzahl bedeutet denjenigen T-Bend-Wert, bei dem die Beschichtung gerade noch nicht abgerissen wird.

Die Glanzwerte werden nach Gardener (Reflexionswinkel: 60°) bestimmt.

Alle Mengenangaben beziehen sich auf das Gewicht, es sei denn, es werden andere Einheiten ausdrücklich angeführt.

Mit Buchstaben gekennzeichnete Versuche sind nicht erfindungsgemäß. Die prozentuale Zusammensetzung der Diolkomponente bei diesen Versuchen ist in Tabelle 3 angegeben.

Die Polyester der Versuche 1, 2, 3, D, E, F und G werden gemäß I.a, der des Versuches 4 gemäß I.b und die der Versuche 5, 6, H, I, K und L gemäß I.c hergestellt. Die Polyester (PE) besaßen nachstehende Zusammensetzung (Tabelle 1) und Eigenschaften (Tabelle 2). Die Herstellung von Lacken und Überzügen sowie deren Prüfung erfolgt in den Versuchen 1, 2, 3, 5 und 6 bzw. D bis L wie unter II. und III. beschrieben. Der Polyester des Versuches 4 wurde entsprechend Versuch A zu einem Überzugsmittel verarbeitet.

Tabelle 1

| Versuch | PE*) aus [Mol] | | Mittleres Molgewicht**) | Säurezahl [mg KOH/g] |
|---------|------|----------|--------------------------|-----------|
| 1 | 8 | NPG | 2360 | 4,9 |
| | 1 | BD-(1.4) | | |
| | 6 | PSA | | |
| | 2 | ADS | | |
| 2 | 7 | NPG | 2670 | 4,7 |
| | 2 | BD-(1.4) | | |
| | 6 | PSA | | |
| | 2 | ADS | | |
| 3 | 3,8 | NPG | 2955 | 5,3 |
| | 3,8 | PG | | |
| | 1,4 | BD-(1.4) | | |
| | 6,5 | PSA | | |
| | 1,5 | ADS | | |
| 4 | 5,1 | NPG | 2865 | 4,4 |
| | 5,1 | PG | | |
| | 1,8 | BD-(1.4) | | |
| | 8,95 | PSA | | |
| | 2,05 | ADS | | |
| 5 | 3,8 | NPG | 2470 | 4,8 |
| | 3,8 | PG | | |
| | 1,4 | BD-(1.3) | | |
| | 6,5 | PSA | | |
| | 1,5 | ADS | | |
| 6 | 7,5 | NPG | 2380 | 4,9 |
| | 1,5 | BD-(1.3) | | |
| | 6 | PSA | | |
| | 2 | ADS | | |
| D | 9 | NPG | 2350 | 4,8 |
| | 6 | PSA | | |
| | 2 | ADS | | |

Fortsetzung

| Versuch | PE*) aus [Mol] | | Mittleres Molgewicht**) | Säurezahl [mg KOH/g] |
|---------|------|--------|------------------------|----------------------|
| E | 4 | NPG | 3050 | 9,7 |
|   | 5 | BD-(1.4) | | |
|   | 6 | PSA | | |
|   | 2 | ADS | | |
| F | 3,8 | NPG | 2620 | 4,7 |
|   | 3,8 | PG | | |
|   | 1,4 | DEG | | |
|   | 6,5 | PSA | | |
|   | 1,5 | ADS | | |
| G | 2,8 | NPG | 3050 | 5,2 |
|   | 4,8 | PG | | |
|   | 1,4 | BD-(1.4) | | |
|   | 6,5 | PSA | | |
|   | 1,5 | ADS | | |
| H | 9 | NPG | 2350 | 4,8 |
|   | 6 | PSA | | |
|   | 2 | ADS | | |
| I | 3,8 | NPG | 2620 | 4,7 |
|   | 3,8 | PG | | |
|   | 1,4 | DEG | | |
|   | 6,5 | PSA | | |
|   | 1,5 | ADS | | |
| K | 3,8 | NPG | 2140 | 4,3 |
|   | 3,8 | PG | | |
|   | 1,4 | HD | | |
|   | 6,5 | PSA | | |
|   | 1,5 | ADS | | |

Fortsetzung

| Versuch | PE*) aus [Mol] | | Mittleres Molgewicht**) | Säurezahl [mg KOH/g] |
|---|---|---|---|---|
| L | 2,8 | NPG | 2475 | 4,2 |
| | 4,8 | PG | | |
| | 1,4 | BD-(1.3) | | |
| | 6,5 | PSA | | |
| | 1,5 | ADS | | |

```
*) NPG      = Neopentylglykol
   BD-(1.3) = Butandiol-(1.3)
   BD-(1.4) = Butandiol-(1.4)
   PG       = Propandiol-(1.2)
   DEG      = Diethylenglykol
   HD       = Hexandiol-(1.6)
   PSA      = Phthalsäureanhydrid
   ADS      = Adipinsäure
```

**) Zahlenmittel — bestimmt durch Endgruppentitration

## Versuch A (gemäß DE-PS 1 805 182)

Aus 5 Molen Ethylenglykol, 5 Molen Propandiol-(1.2), 1,2 Molen Diethylenglykol, 8,3 Molen Phthalsäureanhydrid und 1,9 Molen Adipinsäure wird ein Polyester mit einer Säurezahl von 4,7 mg KOH/g hergestellt. Das Harz besitzt ein mittleres Molekulargewicht von 2545.

Eine 70%ige Lösung des Polyesters in Ethylglykolacetat wird mit einem handelsüblichen, weitgehend methylveretherten Hexamethylolmelamin im Verhältnis — bezogen auf den Polyester — von 82 : 18 gemischt, mit Titandioxid im Verhältnis (Bindemittel : Pigment) 1 : 1 in Gegenwart von 0,3 Gewichtsprozent eines handelsüblichen Verlaufmittels (MODAFLOW®) und 0,1 Gewichtsprozent eines Netzmittels (MARLINAT® DF 8) pigmentiert und mit 3,4% — bezogen auf das Gesamtbindemittel — einer handelsüblichen 50%igen Lösung eines nichtionogenen geblockten Katalysators versetzt. Nach Verdünnung mit einem Ethylglykolacetat/SOLVESSO 150-Gemisch (5,2 : 4,8) auf eine Viskosität entsprechend einer Auslaufzeit von 100 sec im DIN-Becher 4 (berechneter Feststoffgehalt: 78%) erfolgte die Herstellung und Prüfung des Überzugs wie unter III. beschrieben.

Der Überzug weist sehr gute mechanische Eigenschaften auf (T-Bend-Test: O, Bleistifthärte: H). Infolge des Auftretens von Kratern ist er jedoch für die Praxis unbrauchbar.

## Versuch B (gemäß DE-OS 1 805 186)

Aus 10 Molen Ethylenglykol, 7,5 Molen Phthalsäureanhydrid und 1,5 Molen Adipinsäure wird ein Polyester mit einer Säurezahl von 4,2 mg KOH/g hergestellt. Das Harz besitzt ein mittleres Molekulargewicht von 2210. Die Herstellung des Überzugsmittels und des Überzuges sowie deren Prüfung erfolgte wie unter Versuch A beschrieben.

## Versuch C (gemäß DE-AS 2 621 657, Beispiel 1)

Aus 5 Molen Ethylenglykol, 4 Molen Neopentylglykol, 2 Molen Hexandiol-(1.6), 7 Molen Phthalsäureanhydrid, 2 Molen Isophthalsäure und 1 Mol Adipinsäure wird ein Polyester mit einer Säurezahl von 6,7 und einer Hydroxylzahl von 43,5 mg KOH/g hergestellt. Der Polyester wird 70%ig in einem Gemisch aus SOLVESSO 150 und Ethylglykol (9 : 1) gelöst. Die Herstellung des Überzugsmittels und der Überzüge erfolgte wie unter II. und III. beschrieben.

Tabelle 2

| Versuch | *) | T-Bend-Test | | Bleistift-härte | Glanz | Aussehen der Beschichtung |
|---|---|---|---|---|---|---|
| | | ohne | mit | | | |
| | | Klebebandabriß | | | [%] | |
| 1 | a | 0 | 1 | H | 87 | einwandfreie Oberfläche, keine Kraterbildung |
| 2 | a | 0 | 0 | F | 91 | wie Versuch 1 |
| 3 | a | 0 | 1 | H | 90 | wie Versuch 1 |
| 4 | a | 0 | 0—1 | H | — | wie Versuch 1 |
| 5 | a | 0 | 1—2 | H | 90 | guter Verlauf, kraterfrei |
| | b | 0 | 1—2 | 2 H | 89 | guter Verlauf, kraterfrei |
| 6 | b | 0 | 0—1 | 2 H | 89 | guter Verlauf, kraterfrei |
| B | a | 0 | 0—1 | F | — | Kraterbildung |
| C | a | 1 | 4 | H | 90 | Kraterbildung |
| D | a | 1 | 3 | H | 73 | Apfelsinen-schaleneffekt |
| E | a | 0 | 1 | HB | 78 | Apfelsinen-schaleneffekt |
| F | a | 1 | 3 | F | 89 | Kraterbildung |
| G | a | 1 | 2 | H | 91 | Kraterbildung |
| H | a | 1 | 3 | H | 73 | Apfelsinen-schaleneffekt |
| I | a | 1 | 3 | F | 89 | Kraterbildung |
| K | a | 0 | 2 | H | 81 | Kraterbildung |
| L | b | 1—2 | 2 | 2 H | 83 | Kraterbildung |

*) Einbrennbedingungen:
   a = 315 °C/60 sec
   b = 265 °C/120 sec

Tabelle 3

| Versuch | BD [Mol-%] | NPG [Mol-%] | PG [Mol-%] | DEG [Mol-%] | HD [Mol-%] | EG [Mol-%] |
|---------|------------|-------------|------------|-------------|------------|------------|
| A | — | — | 44,64 | 10,72 | — | 44,64 |
| B | — | — | — | — | — | 100 |
| C | — | 36,66 | — | — | 18,19 | 45, 45 |
| D | — | 100 | — | — | — | — |
| E | 55,56 | 44,44 | — | — | — | — |
| F | — | 42,22 | 42,22 | 15,56 | — | — |
| G | 15,56 | 31,11 | 53,33 | — | — | — |
| H | — | 100 | — | — | — | — |
| I | — | 42,22 | 42,22 | 15,56 | — | — |
| K | — | 42,22 | 42,22 | — | 15,56 | — |
| L | 15,56 | 31,11 | 53,33 | — | — | — |

**Patentanspruch**

Flüssiges Überzugsmittel, bestehend aus einer Mischung aus einem Bindemittel, üblichen Lösemitteln sowie gegebenenfalls üblichen Hilfsstoffen, wobei das Überzugsmittel als Bindemittel

A.  45 – 5 Gewichtsprozent Aminoplaste und
B.  55 – 95 Gewichtsprozent mindestens bifunktionelle, überwiegend freie Hydroxyl- neben gegebenenfalls freie Carboxylendgruppen tragende lineare Polyester bzw. -gemische mit einem Molgewicht von 1500 – 5000

enthält und wobei die Polyester der Komponente B. durch Kondensieren von

I.   Butandiol, Neopentylglykol und gegebenenfalls Propandiol mit
II.  überwiegend aromatischen neben aliphatischen Dicarbonsäuren mit 4 – 12 C-Atomen in der Kette

erhalten werden, dadurch gekennzeichnet, daß die Komponente I. ein Gemisch darstellt, bestehend aus

I.1  5 – 30 Molprozent Butandiol-(1.n), wobei n den Wert 3 oder 4 annehmen kann, und
I.2  95 – 70 Molprozent Neopentylglykol, das bis zu 60 Molprozent — bezogen auf Neopentylglykol entsprechend 100 Molprozent — durch Propandiol-(1.2) ersetzt sein kann,

und daß die Komponente II. ein Gemisch darstellt, bestehend aus

II.1  95 – 70 Molprozent einer oder mehrerer aromatischer Dicarbonsäuren, die bis zu 30 Molprozent — bezogen auf alle aromatischen Dicarbonsäuren entsprechend 100 Molprozent — durch cycloaliphatische Dicarbonsäuren ersetzt sein können, und
II.2  5 – 30 Molprozent einer oder mehrerer aliphatischer Dicarbonsäuren.

**Claim**

A liquid coating composition consisting of a mixture of a binder, a conventional solvent and optionally conventional assistants, the binder being

A.  45 to 5% by weight of an aminoplast and

10

0 008 344

B.   55 to 95% by weight of an at least bifunctional linear polyester or polyester mixture having a molecular weight of 1500 to 5000 and bearing predominantly free hydroxyl end groups optionally together with free carboxyl end groups,

and the polyester constituting component B being obtained by condensation of

I.   butanediol, neopentyl glycol and optionally propanediol, with
II.  predominantly aromatic, but also aliphatic, dicarboxylic acids of 4 to 12 carbon atoms in the chain,

characterised in that component I is a mixture of

I.1  5 to 30 mol% of butanediol-(1,n), where n is 3 or 4, and
II.2 95 to 70 mol% of neopentyl glycol, up to 60 mol% of which, based on neopentyl glycol as 100 mol%, can be replaced by propanediol-(1,2),

and that component II is a mixture of

II.1 95 to 70 mol% of one or more aromatic dicarboxylic acids, up to 30 mol% of which, based on total aromatic dicarboxylic acid as 100 mol%, can be replaced by cycloaliphatic dicarboxylic acid, and
II.2 5 to 3 mol% of one or more aliphatic dicarboxylic acids.

**Revendication**

Agent de revêtement liquide, constitué par un mélange d'un liant, de solvants usuels et, éventuellement, d'adjuvants usuels, l'agent de revêtement renfermant comme liant

A.   de 45 à 5% en poids d'aminoplastes et
B.   de 55 à 95% en poids de polyesters linéaires au moins bifonctionnels, portant surtout des groupes hydroxyle libres en plus de groupes terminaux carboxyle éventuellement libres, ou de mélanges de ces polyester, d'un poids moléculaire de 1500 à 5000

et les polyesters du composant (B) étant obtenus en condensant

I.   du butane-diol, du néopentylglycol et éventuellement du propane-diol avec
II.  des acides dicarboxyliques surtout aromatiques en plus d'acides dicarboxyliques aliphatiques comportant de 4 à 12 atomes de carbone dans la chaîne,

ledit agent de revêtement étant caractérisé par le fait que le composant (I) représente un mélange constitué par

I.1  5 à 30% en moles de butane-diol-(1.n), n pouvant prendre la valeur 3 ou 4, et par
I.2  95 à 70% en moles de néopentylglycol qui peut être remplacé, jusqu'à 60% en moles, relativement au néopentylglycol correspondant à 100% en moles, par du propane-diol-(1,2),

et par le fait que le composant (II) représente un mélange constitué par

II.1 95 à 70% en moles d'un ou plusieurs acides dicarboxyliques aromatiques qui peuvent, jusqu'à 30% en moles, relativement à tous les acides dicarboxyliques aromatiques correspondant à 100% en moles, être remplacés par des acides dicarboxyliques cyclo-aliphatiques, et par
II.2 5 à 30% en moles d'un ou plusieurs acides dicarboxyliques aliphatiques.

11